Europäisches Patentamt

European Patent Office

Office européen des brevets

(19)

(11) Publication number: 0 334 722
A2

# (12) EUROPEAN PATENT APPLICATION

(21) Application number: 89400715.2

(22) Date of filing: 15.03.89

(51) Int. Cl.⁴: B 60 T 17/22
B 60 T 11/18

(30) Priority: 25.03.88 IT 1995588

(43) Date of publication of application:
27.09.89 Bulletin 89/39

(84) Designated Contracting States: DE FR GB IT SE

(71) Applicant: BENDIX ITALIA S.p.A.
Via Cavalli 53 A Casella Postale 66
I-26013 Crema (IT)

(72) Inventor: Cadeddu, Leonardo
Bendix France S.A. 126 Rue de Stalingrad
F-93700 Drancy (FR)

(74) Representative: Lejet, Christian et al
Division Technique Service Brevets BENDIX Europe 126,
rue de Stalingrad
F-93700 Drancy (FR)

(54) Braking assembly comprising a failure indicator.

(57) The invention relates to a braking assembly for automotive vehicle comprising a tandem master-cylinder (10) having two pressure chambers connected by hydraulic passages with brakes of the wheels of the vehicle, a braking corrector (30) arranged in a hydraulic passage leading to at least two of the wheel brakes.

According to the invention, the corrector is a dual corrector the two independent outputs of which are respectively connected to a respective wheel brake (36, 38) via a fluid pressure failure indicator (44).

Preferingly, the wheel brakes controlled by the corrector are the rear one.

FIG 1

FIG2

**Description**

BRAKING ASSEMBLY COMPRISING A FAILURE INDICATOR

The present invention relates to a braking assembly comprising a failure indicator for automotive vehicles. More particularly, the invention relates to an assembly having two independent braking circuits with a braking corrector valve.

Vehicle braking assembly generally contain a corrector or proportioning valve which limits the braking pressure applied to the brakes of the rear wheels of a vehicule with respect to the pressure applied to the brakes of the front wheels. Such a corrector may be responsive to the load of the vehicle.

As a failure or break-down of such a corrector or proportioning valve may adversely affect the braking characteristics of the vehicle, it is desirable that the vehicle driver be warned of such a failure as soon as possible.

It is therefore an object of the present invention to provide a braking assembly for a vehicle which is adapted to indicate the failure of a braking corrector, which is simple and reliable.

It is also an object of the present invention to provide a braking assembly for a vehicle which is adapted to indicate any failure in the braking circuits in a reliable and inexpensive way.

Accordingly, there is provided a braking assembly for automotive vehicles comprising a tandem master cylinder connected by hydraulic passages with the brakes of the wheels of the vehicle, and a braking corrector arranged in the hydraulic passages leading to at least two of the wheel brakes.

According to an aspect of the invention, the brake corrector is a dual corrector, the two independent outputs of which are respectively connected to a respective wheel brake via a fluid pressure failure indicator.

Generally, the wheel brakes controlled by the corrector are the rear one. When one chamber of the master-cylinder is dedicated to the front wheels and the other chamber is dedicated to the rear wheels, the two independent inlets of the dual corrector are connected in parallel to said other chamber. When each chamber of the master-cylinder is dedicated to a given front wheel and the opposite side rear wheel, the dual corrector is connected as usual in the rear wheel circuits.

The invention will now be described by way of example with reference to the accompanying drawings, in which :

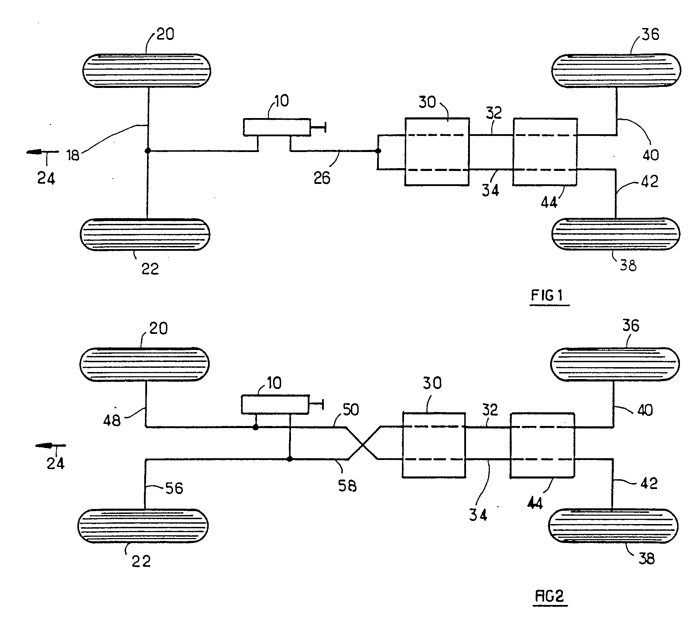

- Figures 1 and 2 are diagrammatic representations of a braking assembly according to the invention.

As shown in Figure 1, each of the pressure chambers (not shown) of a tandem master-cylinder 10 is connected to a respective braking circuit. In the illustrated embodiment, a first braking circuit is connected by a brake pipe 18 to the brakes (not shown) of the two front wheels 20 and 22 of the vehicle. The forward direction of movement of the vehicle is shown by arrow 24. The second braking circuit comprises a brake pipe 26 which communicates, at its end remote from the master-cylinder 10, with parallel pipes. The two ends of the brake pipes are each connected to a respective inlet of a dual circuit braking corrector 30, for example that described in EP-B-0018254. The corrector 30 is, for instance, subject to the load of the vehicle. The corrector 30 has two independent outputs 32 and 34, each of which is connected to a respective brake of rear wheel 36 and 38 by a brake pipe 40 and 42 via a fluid pressure failure indicator 44. An example of such a failure indicator is described in US-A-3, 916, 129. The location of the indicator 44 between the corrector 30 and the brakes of the rear wheels 36 and 38 allows it to be responsive to any failure of the corrector 30. The indicator 44 operates a warning signal for the vehicle driver when there is an imbalance between the pressures in the two fluid passages through the indicator. Failure of the corrector 30 will result in such an imbalance in the pressures to the rear wheel brakes.

As it may be understood by the skilled man, thanks to the use of a dual corrector 30 in the rear wheel braking circuit, a failure of such corrector may be detected by the failure indicator.

Nevertheless it may be useful to detect a failure anywhere in the two braking circuits. In this case, another failure indicator must be connected between the outlets of the master-cylinder 10.

In order to avoid this disadvantage, and to provide a complete detection of any failure in both braking circuits, the embodiment of Figure 2 is preferred.

The braking assembly shown in Figure 2 differs from that of Figure 1, in that the brake of a given front wheel is operated together with the brake of a rear wheel on the opposite side of the vehicle. Such a braking assembly is commonly adopted by certain motor vehicle manufacturers.

Those elements of the assembly of Figure 2 which are common to that of Figure 1 carry the same reference numerals. As shown, a first chamber of the tandem master-cylinder 10 is connected by a brake pipe 48 to the brake of the right-hand front wheel 20 and also communicates by way of brake pipe 50 with one inlet of a dual braking corrector 30 and thence by way of pipe 34 passes through the failure detector 44 to the brake of the left-hand rear wheel 38. In a similar manner, the other chamber of the master-cylinder 10 is connected by a brake pipe 56 to the brake of the left-hand front wheel 22 of the vehicle and also communicates with the other inlet of corrector 30 by a brake pipe 58. The corresponding outlet of the corrector 30 communicates with the right-hand rear wheel 36 by way of brake pipe 32 and the failure indicator 44. As with the assembly of Figure 1 the failure indicator will detect a pressure imbalance resulting from failure of the corrector 30. Moreover any pressure imbalance resulting from a failure anywhere in the braking circuits and in the master-cylinder is detected and this results in a warning signal for the vehicle driver by using only one failure detector.

## Claims

1. Braking assembly for automotive vehicle comprising a tandem master-cylinder (10) having two pressure chambers connected by hydraulic passages with brakes of the wheels of the vehicle, a braking corrector (30) arranged in a hydraulic passage leading to at least two of the wheel brakes, said corrector (30) being a dual corrector the two independent outputs of which are respectively connected to a respective wheel brake via a fluid pressure failure indicator (44).

2. Braking assembly according to claim 1, characterized in that the wheel brakes controlled by said corrector (30) are the rear one (36, 38).

3. Braking assembly according to claim 1 or 2, characterized in that one chamber of said master-cylinder (10) is connected to the brakes of the front wheels (20, 22) of the vehicle and the other chamber is connected to the two independent inlets of the dual corrector (30) in parallel.

4. Braking assembly according to claim 1 or 2, characterized each chamber of said master-cylinder (10) is connected to the brake of a front wheel (20, 22) on one side of the vehicle and, by the intermediary of corrector (30) and failure indicator (44), to the brake of a rear wheel (38, 36) on the opposite side of the vehicle.

FIG 1

FIG2